# EUROPEAN PATENT APPLICATION

(11) **EP 4 786 686 A1**
(43) Date of publication of application: **05.08.2026**
(21) Application number: 24871452.9
(22) Date of filing: 12.07.2024
(51) Int. Cl.: E02F 9/00

(54) **ELECTRIC WORKING MACHINE**

(30) Priority: 27.09.2023 JP 2023166553
(71) Applicant: Hitachi Construction Machinery Co., Ltd., Tokyo 110-0015 (JP)
(72) Inventor: OTA, Yasunori, Tsuchiura-shi, Ibaraki 300-0013 (JP); IMAI, Yuusuke, Tsuchiura-shi, Ibaraki 300-0013 (JP); IWASAKI, Takuma, Tsuchiura-shi, Ibaraki 300-0013 (JP); HOSHINO, Masatoshi, Tsuchiura-shi, Ibaraki 300-0013 (JP)
(74) Representative: MERH-IP Matias Erny Reichl Hoffmann Patentanwälte PartG mbB
(86) International application number: PCT/JP2024/025361
(87) International publication number: WO 2025/069648

(57) **Abstract**

Provided is an electrically driven work machine including a battery, an electrically driven motor that uses electric power of the battery as a driving source, a hydraulic pump that is driven by the electrically driven motor and that pumps a hydraulic operating fluid into a hydraulic actuator, a hydraulic operating fluid cooling circuit having an oil cooler that cools the hydraulic operating fluid, a cooling refrigerant circuit that circulates a cooling refrigerant, and a battery temperature adjusting circuit that circulates a heat medium that adjusts a temperature of the battery, the battery temperature adjusting circuit having an electric heater that heats the heat medium, a battery cooling heat exchanger that cools the heat medium by making the heat medium exchange heat with the cooling refrigerant circulating through the cooling refrigerant circuit, and a battery warming-up heat exchanger that heats the heat medium by making the heat medium exchange heat with the hydraulic operating fluid flowing through the hydraulic operating fluid cooling circuit.

## Description

### Technical Field

The present invention relates to an electrically driven work machine that uses the electric power of a battery as a driving source.

### Background Art

To realize a decarbonized society, there has been a growing demand for an electric driving system superseding an engine also in the construction machine industry. However, unlike a passenger car, a work machine having a high average load uses high electric power required for charging or discharging a battery. Hence, the role of a battery temperature adjusting system is particularly important to suppress a degradation of the battery and maintain stable output power.

In addition, in an electric vehicle (EV) that has been increasing output power, it has become difficult for a conventional air cooling system using natural wind or air-conditioning air to adjust the temperature of the battery. A battery cooling system using an air conditioning refrigerant, for example, has been proposed (Patent Document 1).

### Prior Art Document

### Patent Documents

Patent Document 1: JP-2019-26111-A

### Summary of the Invention

### Problem to be Solved by the Invention

The battery has a proper temperature range for the battery to operate appropriately. The work machine such as a hydraulic excavator may operate in a mountainous area on the frontier, in an area of heavy snowfall, or under various other cold environments, and the battery may become significantly low in temperature. When the temperature of the battery is significantly low, it is desirable to warm up the battery by using an electric heater, for example, and increase the temperature of the battery to a proper temperature range as quickly as possible.

However, a configuration using the electric heater solely for the warming up of the battery consumes a large amount of electric power in order to warm up the battery of a large size. In addition, when the temperature of the battery is significantly low, it takes a long time to increase the temperature of the large-sized battery to a proper temperature by only the electric heater.

It is an object of the present invention to provide an electrically driven work machine that can achieve both a cooling performance and a heating performance for a battery, and suppress a decrease in energy efficiency due to the warming up of the battery.

### Means for Solving the Problem

In order to achieve the above object, according to the present invention, there is provided An electrically driven work machine including: a battery; an electrically driven motor that uses electric power of the battery as a driving source; a hydraulic pump that is driven by the electrically driven motor and that pumps a hydraulic operating fluid into a hydraulic actuator; a hydraulic operating fluid cooling circuit having an oil cooler that cools the hydraulic operating fluid; a cooling refrigerant circuit that circulates a cooling refrigerant; and a battery temperature adjusting circuit that circulates a heat medium that adjusts a temperature of the battery. The battery temperature adjusting circuit has an electric heater that heats the heat medium, a battery cooling heat exchanger that cools the heat medium by making the heat medium exchange heat with the cooling refrigerant circulating through the cooling refrigerant circuit, and a battery warming-up heat exchanger that heats the heat medium by making the heat medium exchange heat with the hydraulic operating fluid flowing through the hydraulic operating fluid cooling circuit.

### Advantages of the Invention

According to the present invention, it is possible to achieve both a cooling performance and a heating performance for a battery, and suppress a decrease in energy efficiency due to the warming up of the battery.

### Brief Description of the Drawings

[FIG. 1] FIG. 1 is a side view illustrating an external appearance of a hydraulic excavator as an example of an electrically driven work machine according to one embodiment of the present invention.
[FIG. 2] FIG. 2 is a schematic diagram illustrating an example of a configuration of a driving system mounted in the hydraulic excavator illustrated in FIG. 1.
[FIG. 3] FIG. 3 is a schematic diagram illustrating an example of a configuration of a cooling circuit provided to the hydraulic excavator illustrated in FIG. 1.
[FIG. 4] FIG. 4 is a flowchart illustrating an example of a procedure of controlling a first hydraulic operating fluid control valve by a controller provided to the hydraulic excavator illustrated in FIG. 1.
[FIG. 5] FIG. 5 is a flowchart illustrating an example of a procedure of controlling a second hydraulic operating fluid control valve by the controller provided to the hydraulic excavator illustrated in FIG. 1.

### Mode for Carrying Out the Invention

An embodiment of the present invention will hereinafter be described with reference to the drawings.

### (electrically Driven Work Machine)

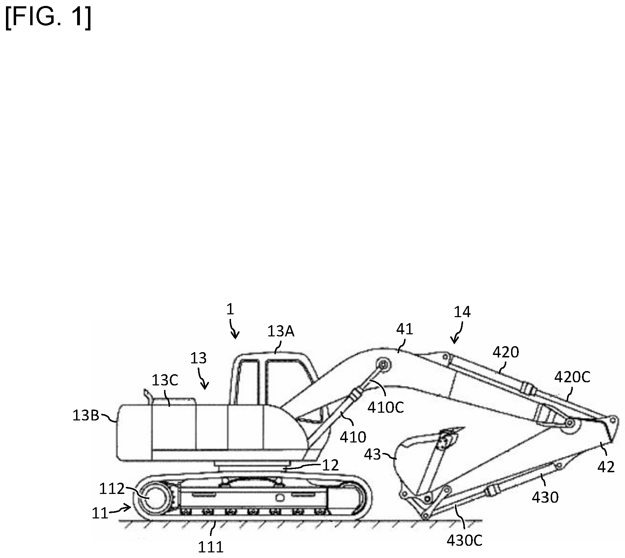

FIG. 1 is a side view illustrating an external appearance of a hydraulic excavator 1 as an example of an electrically driven work machine according to one embodiment of the present invention. Suppose that, in FIG. 1, a right side is a front of an upper swing structure 13. A general configuration and operation of the hydraulic excavator 1 will be described with reference to this figure.

The hydraulic excavator 1 illustrated in FIG. 1 includes: a lower track structure 11 for travelling on a road surface; an upper swing structure 13 swingably attached to an upper part of the lower track structure 11 via a swing device 12; and a front work implement 14 that is pivotably coupled to a front portion of the upper swing structure 13 and that performs work such as excavation. The lower track structure 11 and the upper swing structure 13 constitute a machine body of the hydraulic excavator 1. The front work implement 14 is attached to the machine body.

The lower track structure 11 is of a crawler type provided with left and right (both ends in a vehicle width direction) crawlers 111. However, the lower track structure 11 may be of a wheel type. The left and right crawlers 111 are driven independently of each other by respective travelling motors 112. The hydraulic excavator 1 thereby travels in a forward-rearward direction and the like in a state in which the left and right crawlers 111 are in contact with the ground. FIG. 1 illustrates only the crawler 111 and the travelling motor 112 on a right side.

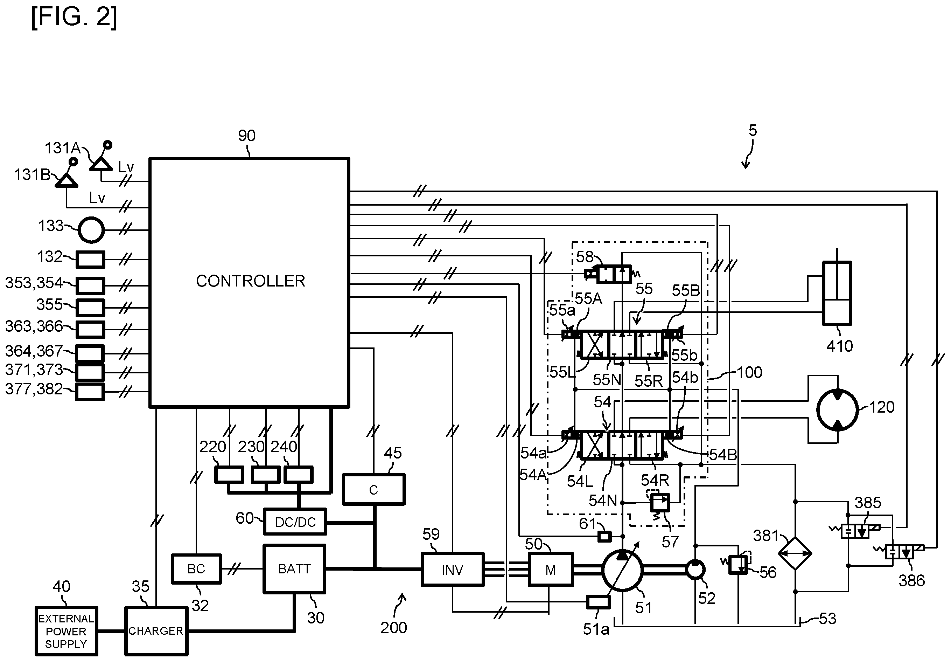

The upper swing structure 13 is provided with: a cab 13A to be boarded by an operator; a counterweight 13B for maintaining a weight balance with the front work implement 14; and a machine room 13C that houses equipment such as a battery, an electrically driven motor, an electrically driven motor control system, and a hydraulic pump to be described later therein. In the upper swing structure 13, the cab 13A is disposed in a front portion thereof, the counterweight 13B is disposed in a rear portion thereof, and the machine room 13C is disposed between the cab 13A and the counterweight 13B. The upper swing structure 13 swings with respect to the lower track structure 11 by being driven by a swing motor 120 (see FIG. 2) included in the swing device 12.

The front work implement 14 includes: a boom 41 that has a proximal end portion thereof rotatably attached to the upper swing structure 13 and that rotates (is pivotably elevated) in an upward-downward direction with respect to the upper swing structure 13; an arm 42 that is rotatably attached to a distal end portion of the boom 41 and that rotates in the forward-rearward direction with respect to the boom 41; and a bucket 43 that is rotatably attached to a distal end portion of the arm 42 and that rotates in the forward-rearward direction with respect to the arm 42.

The bucket 43 is an attachment that, for example, excavates soil or the like, levels the soil or the like, or compacts the ground. This bucket 43 can be changed to another attachment such as, for example, a grapple for gripping wood, rocks, waste, or the like, or a breaker for excavating a rock bed. The hydraulic excavator 1 can thereby perform various work including excavation, crushing, and the like by using the attachments suitable for the content of the work.

In addition, the front work implement 14 has: a boom cylinder 410 that couples the upper swing structure 13 and the boom 41 to each other; an arm cylinder 420 that couples the boom 41 and the arm 42 to each other; a bucket cylinder 430 that couples the arm 42 and the bucket 43 to each other; and a plurality of pipes (not illustrated) that respectively introduce a hydraulic operating fluid into these hydraulic cylinders 410, 420, and 430.

The boom cylinder 410 extends or retracts with a rod 410C exiting or entering a tube, and thereby rotates the boom 41 with respect to the upper swing structure 13. The arm cylinder 420 extends or retracts with a rod 420C exiting or entering a tube, and thereby rotates the arm 42 with respect to the boom 41. The bucket cylinder 430 extends or retracts with a rod 430C exiting or entering a tube, and thereby rotates the bucket 43 with respect to the arm 42.

The boom cylinder 410, the arm cylinder 420, and the bucket cylinder 430 as well as the travelling motor 112 and the swing motor 120 are hydraulic actuators driven by the hydraulic operating fluid from a main pump 51 (FIG. 2). Incidentally, in the following description, the boom cylinder 410, the arm cylinder 420, the bucket cylinder 430, the travelling motor 112, and the swing motor 120 may be referred to collectively as hydraulic actuators.

### (Driving System)

FIG. 2 is a schematic diagram illustrating an example of a configuration of a driving system mounted in the hydraulic excavator 1. The driving system of the hydraulic excavator 1 will be described with reference to FIG. 2. In FIG. 2, already described elements are given the same reference signs as in FIG. 1, and description thereof will be omitted. In addition, because the boom cylinder 410, the arm cylinder 420, and the bucket cylinder 430 each have a similar configuration as a hydraulic cylinder, FIG. 2 illustrates only the boom cylinder 410 representing the hydraulic cylinders, and description of the arm cylinder 420 and the bucket cylinder 430 will be omitted. Similarly, because the travelling motor 112 and the swing motor 120 each have a similar configuration as a hydraulic motor, FIG. 2 illustrates only the swing motor 120 representing the hydraulic motors, and description of the travelling motor 112 will be omitted. Hence, FIG. 2 does not illustrate directional control valves, operation devices, and the like corresponding to the hydraulic actuators excluding the boom cylinder 410 and the swing motor 120.

A hydraulic circuit 5 of the driving system illustrated in FIG. 2 includes a main pump 51 and a pilot pump 52 as hydraulic pumps, a hydraulic operating fluid tank 53 for retaining the hydraulic operating fluid, a control valve 100, and the like. The control valve 100 includes directional control valves 54 and 55 for controlling a flow of the hydraulic operating fluid delivered from the main pump 51 and the like. The directional control valve 54 controls a flow (a supply direction and a supply flow rate) of the hydraulic operating fluid from the main pump 51 to the swing motor 120, and thereby controls the operation of the swing motor 120. The directional control valve 55 controls a flow (a supply direction and a supply flow rate) of the hydraulic operating fluid from the main pump 51 to the boom cylinder 410, and thereby controls the operation of the boom cylinder 410. The inside of the cab 13A is provided with a work mode selecting switch 132, a motor control dial 133 for setting the rotational speed of an electrically driven motor 50, control lever devices 131A and 131B, a controller 90, and the like.

The main pump 51 is a variable displacement hydraulic pump driven by the electrically driven motor 50. The main pump 51 pumps the hydraulic operating fluid sucked from the hydraulic operating fluid tank 53, and supplies the hydraulic operating fluid to each of the swing motor 120 and the boom cylinder 410 via the directional control valves 54 and 55. Incidentally, while a variable displacement hydraulic pump is used as the main pump 51 in the present embodiment, there is no limitation to this, but a fixed displacement hydraulic pump can also be used as the main pump 51.

The pilot pump 52 is a fixed displacement hydraulic pump driven by the electrically driven motor 50. This pilot pump 52 delivers the hydraulic operating fluid sucked from the hydraulic operating fluid tank 53, and supplies the hydraulic operating fluid to each of a pair of pressure receiving chambers 54A and 54B of the directional control valve 54 and a pair of pressure receiving chambers 55A and 55B of the directional control valve 55.

The hydraulic circuit 5 further includes: a main relief valve 57 that defines an upper limit of the pressure of a deliver line of the main pump 51; a pilot relief valve 56 that defines an upper limit of the pressure of a deliver line of the pilot pump 52; and an opening and closing valve 58 that opens and closes a line between the directional control valve 55 and the hydraulic operating fluid tank 53.

The control lever devices 131A and 131B respectively correspond to the swing motor 120 and the boom cylinder 410. Electric levers that output an electric lever signal Lv (operation signal) corresponding to an operation amount, for example, are used as the control lever devices 131A and 131B. The controller 90 outputs command signals corresponding to the lever signals Lv input from the control lever devices 131A and 131B to solenoid proportional valves 54a and 54b and solenoid proportional valves 55a and 55b. The controller 90 thereby controls switching directions and stroke amounts of the directional control valves 54 and 55. At the same time, the pump displacement (delivery flow rate) of the main pump 51 is controlled by outputting a command signal according to a pump delivery pressure sensor 61, an electrically driven motor rotational speed sensor (not illustrated), the lever signals Lv, and the like to a regulator 51a of the main pump 51. With such a configuration, the control lever devices 131A and 131B make the respective hydraulic actuators perform a desired operation.

The directional control valve 54 is a center bypass type directional control valve and has a first switching position 54L for normally rotating the swing motor 120, a neutral position 54N for making the main pump 51 and the hydraulic operating fluid tank 53 communicate with each other and directly returning the hydraulic operating fluid to the hydraulic operating fluid tank 53, and a second switching position 54R for reversely rotating the swing motor 120. The directional control valve 54 is configured to be switched to one of the first switching position 54L, the neutral position 54N, and the second switching position 54R by a stroke of a spool within the directional control valve 54 according to pilot pressures respectively acting on the pair of pressure receiving chambers 54A and 54B. The flow rate and direction (flow) of the hydraulic operating fluid supplied from the main pump 51 to the swing motor 120 are thereby controlled.

As with the directional control valve 54, the directional control valve 55 is a center bypass type directional control valve and has a first switching position 55L for extending the boom cylinder 410, a neutral position 55N for making the main pump 51 and the hydraulic operating fluid tank 53 communicate with each other and directly returning the hydraulic operating fluid to the hydraulic operating fluid tank 53, and a second switching position 55R for retracting the boom cylinder 410. As with the directional control valve 54, the directional control valve 55 is configured to be switched to one of the first switching position 55L, the neutral position 55N, and the second switching position 55R by a stroke of a spool within the directional control valve 55 according to pilot pressures respectively acting on the pair of pressure receiving chambers 55A and 55B. The flow rate and direction (flow) of the hydraulic operating fluid supplied from the main pump 51 to the boom cylinder 410 are thereby controlled.

The opening and closing valve 58 is a solenoid proportional valve whose opening degree is adjusted in proportion to the magnitude of a command current. The opening area of the opening and closing valve 58 is adjusted in proportion to the magnitude of the command current from the controller 90. Even at a time of a non-operation state or at a time of a small load on the hydraulic actuators, the pressure of the main pump 51 can be adjusted freely by adjusting the opening degree of the opening and closing valve 58.

In the hydraulic excavator 1, the main pump 51 is driven by the electrically driven motor 50. Then, the electrically driven motor 50 uses the electric power of a battery 30 as a driving source.

An electric power circuit 200 of the driving system is connected with not only the battery 30 and the electrically driven motor 50 but also the electrically driven motor control system for controlling the electrically driven motor 50 and various types of electrically driven auxiliary equipment (for example, an electrically driven compressor 45). The electrically driven motor control system includes an inverter 59, a machine-mounted charger 35, a DC-to-DC converter 60, and the like.

The battery 30 is the driving source of the hydraulic excavator 1. The battery 30 is constituted by, for example, a lithium ion battery or a nickel hydrogen battery. The battery 30 is provided with a battery sensor (not illustrated) for detecting operation states such as a voltage, a current, and a state of charge (SOC) of the battery 30. A battery controller 32 monitors the state of the battery 30 on the basis of the output of the battery sensor.

The vehicle-mounted charger 35 can charge the battery 30 by an external power supply 40. The vehicle-mounted charger 35 is controlled by the controller 90 according to the state of the battery 30 monitored by the battery controller 32 and performs charging control on the battery 30.

The DC-to-DC converter 60 generates a voltage for machine control (for example, 24 V) by stepping down the voltage of the battery 30 (for example, 650 V) and supplies electric power to the controller 90, a radiator electrically driven fan 220, a condenser electrically driven fan 230, an oil cooler electrically driven fan 240, and the like.

The inverter 59 converts the direct-current voltage (battery voltage) of the battery 30 into an alternating-current voltage and supplies the alternating-current voltage to the electrically driven motor 50. The inverter 59 thereby controls the rotational speed of the electrically driven motor 50.

The controller 90 is a high-level controller that controls the driving system of the hydraulic excavator 1. The controller 90 controls each solenoid valve included in the hydraulic circuit, low-level controllers (the inverter 59, the battery controller 32, and the vehicle-mounted charger 35), and the like.

### (Cooling Circuit)

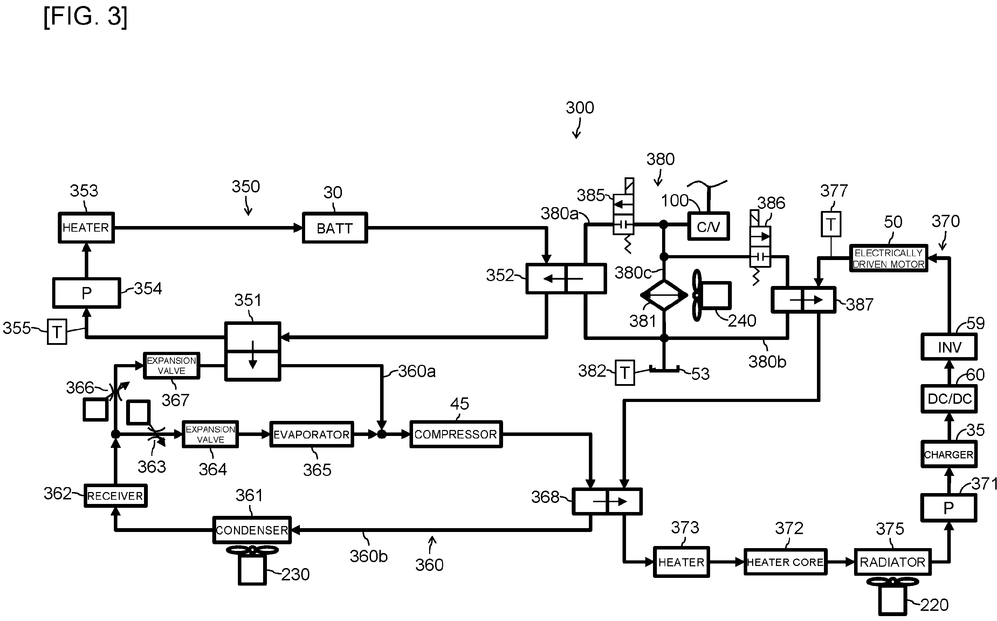

FIG. 3 is a schematic diagram illustrating an example of a configuration of a cooling circuit provided to the hydraulic excavator 1. The cooling circuit mounted in the hydraulic excavator 1 will be described with reference to FIG. 3. In FIG. 3, already described elements are given the same reference signs as in FIG. 1 and FIG. 2, and description thereof will be omitted as appropriate. In addition, arrows displayed in heat exchangers in the figure, specifically, a battery cooling heat exchanger 351, a battery warming-up heat exchanger 352, a water-cooled condenser 368, and an electric apparatus warming-up heat exchanger 387 indicate a direction of transfer of heat from a high temperature side to a low temperature side.

The cooling circuit 300 illustrated in FIG. 3 includes a battery temperature adjusting circuit 350, a cooling refrigerant circuit 360, an electric apparatus cooling circuit 370, and a hydraulic operating fluid cooling circuit 380.

### - Battery Temperature Adjusting Circuit -

The battery temperature adjusting circuit 350 is a circuit that circulates a heat medium (for example, water) for adjusting the temperature of the battery 30. This battery temperature adjusting circuit 350 is connected with the battery 30, the battery cooling heat exchanger 351 for cooling the heat medium flowing through the battery temperature adjusting circuit 350 by making the heat medium exchange heat with a low-pressure cooling refrigerant circulating through the cooling refrigerant circuit 360, the battery warming-up heat exchanger 352 for heating the heat medium by making the heat medium exchange heat with the hydraulic operating fluid flowing through the hydraulic operating fluid cooling circuit 380, an electric heater 353 for heating the heat medium, a water pump 354 for circulating the heat medium through the battery temperature adjusting circuit 350, and a heat medium temperature sensor 355 for measuring the temperature of the heat medium. That is, the battery temperature adjusting circuit 350 has, on a path thereof, the battery 30, the battery warming-up heat exchanger 352, the battery cooling heat exchanger 351, the heat medium temperature sensor 355, the water pump 354, and the electric heater 353.

In the battery temperature adjusting circuit 350 illustrated in the present embodiment, the heat medium is circulated by the water pump 354. This heat medium is cooled by the battery cooling heat exchanger 351 or is heated by the electric heater 353 and the battery warming-up heat exchanger 352 as needed. The cooled or heated heat medium in this manner cools or warms up the battery 30. However, the arrangement of the battery 30, the battery warming-up heat exchanger 352, the battery cooling heat exchanger 351, the water pump 354, and the electric heater 353 on the path of the battery temperature adjusting circuit 350 is not necessarily limited to this order and can be changed in design as needed.

Incidentally, in the battery cooling heat exchanger 351, a heat exchange is performed between the heat medium flowing through the battery temperature adjusting circuit 350 and the cooling refrigerant flowing through the cooling refrigerant circuit 360. Though the cooling refrigerant circuit 360 will be described later, the battery cooling heat exchanger 351 brings a flow passage through which the heat medium moving from the battery 30 to the water pump 354 flows in the battery temperature adjusting circuit 350 into contact with a bypass refrigerant passage 360a through which the cooling refrigerant moving from a receiver 362 to the electrically driven compressor 45 flows in the cooling refrigerant circuit 360. The battery cooling heat exchanger 351 thereby makes the fluids flowing through the respective flow passages exchange heat with each other. More specifically, within the battery cooling heat exchanger 351, the respective flow passages of the battery temperature adjusting circuit 350 and the cooling refrigerant circuit 360 are formed by a heat transfer pipe of a material having a high heat transfer efficiency (for example, a metal), and these flow passages are arranged so as to meander while maintaining a state of being in contact with each other. A surface area is thereby secured in which the respective fluids flowing through the battery temperature adjusting circuit 350 and the cooling refrigerant circuit 360 exchange heat with each other. Thus, in the battery cooling heat exchanger 351, heat is transferred with high efficiency from a high temperature side to a low temperature side of the fluids passing through the respective flow passages. The cooling refrigerant in the bypass refrigerant passage 360a is in a low-pressure and low-temperature state (for example, approximately 0°C) after passing through an expansion valve 367 and is held lower in temperature than the temperature of the heat medium of the battery temperature adjusting circuit 350. The battery cooling heat exchanger 351 therefore cools the heat medium of the battery temperature adjusting circuit 350.

In addition, in the battery warming-up heat exchanger 352, a heat exchange is performed between the heat medium flowing through the battery temperature adjusting circuit 350 and the hydraulic operating fluid flowing through the hydraulic operating fluid cooling circuit 380. Though the hydraulic operating fluid cooling circuit 380 will be described later, the battery warming-up heat exchanger 352 brings the flow passage through which the heat medium moving from the battery 30 to the water pump 354 flows (flow passage from the battery 30 to the battery cooling heat exchanger 351 in the present embodiment) in the battery temperature adjusting circuit 350 into contact with a first bypass hydraulic line 380a through which the hydraulic operating fluid moving from a first hydraulic operating fluid control valve 385 to the hydraulic operating fluid tank 53 flows in the hydraulic operating fluid cooling circuit 380. The battery warming-up heat exchanger 352 thereby makes the fluids passing through the respective flow passages exchange heat with each other. As in the battery cooling heat exchanger 351, within the battery warming-up heat exchanger 352, the respective flow passages of the battery temperature adjusting circuit 350 and the hydraulic operating fluid cooling circuit 380 which flow passages are made of a metal, for example, meander in a state of being in contact with each other, and heat is transferred with high efficiency from a high temperature side to a low temperature side of the fluids flowing through the respective flow passages. The temperature of the hydraulic operating fluid flowing through the hydraulic operating fluid cooling circuit 380 rises after passing through the hydraulic pump and various kinds of hydraulic apparatuses and is higher than the temperature of the heat medium of the battery temperature adjusting circuit 350. The battery warming-up heat exchanger 352 therefore heats the heat medium of the battery temperature adjusting circuit 350.

The temperature of the heat medium measured by the heat medium temperature sensor 355 is input to the controller 90 (FIG. 2). The present embodiment illustrates a configuration in which the heat medium temperature sensor 355 is located between the battery cooling heat exchanger 351 and the water pump 354 and measures the temperature of the heat medium after being lowered in temperature by the battery cooling heat exchanger 351 and before being heated by the electric heater 353. The temperature of the heat medium flowing through the battery temperature adjusting circuit 350 is controlled to an appropriate temperature range, which is preliminary defined, by the battery cooling heat exchanger 351, the battery warming-up heat exchanger 352, and the electric heater 353. Thus, a degradation of the battery 30 is suppressed, and a stable output power of the battery 30 is maintained. The battery warming-up heat exchanger 352 and the electric heater 353 are provided as means for heating the heat medium flowing through the battery temperature adjusting circuit 350. The electric apparatuses of the battery temperature adjusting circuit 350 (such as the water pump 354), including the electric heater 353, are driven by the electric power of the battery 30, for example.

### - Hydraulic Operating Fluid Cooling Circuit -

The hydraulic operating fluid cooling circuit 380 is a circuit that cools the hydraulic operating fluid returning to the hydraulic operating fluid tank 53 via the control valve 100. The hydraulic operating fluid cooling circuit 380 has, on a path thereof, an oil cooler 381 and the oil cooler electrically driven fan 240 described above as a hydraulic operating fluid cooling device. The oil cooler electrically driven fan 240 is controlled by the controller 90 (FIG. 2) according to the temperature of the hydraulic operating fluid. The temperature of the hydraulic operating fluid is measured by a hydraulic operating fluid temperature sensor 382 and is input to the controller 90 (FIG. 2). In the present embodiment, the hydraulic operating fluid temperature sensor 382 is provided to the hydraulic operating fluid tank 53. The electric apparatuses of the hydraulic operating fluid cooling circuit 380 such as the oil cooler electrically driven fan 240 are driven by the electric power of the battery 30, for example.

The hydraulic operating fluid cooling circuit 380 includes: a main hydraulic line 380c through which the hydraulic operating fluid is made to flow via the oil cooler 381; and the first bypass hydraulic line 380a that is connected to the main hydraulic line 380c and through which the hydraulic operating fluid is made to flow to the hydraulic operating fluid tank 53 so as to bypass the oil cooler 381. The first bypass hydraulic line 380a is connected to the battery warming-up heat exchanger 352 described above. The battery warming-up heat exchanger 352 and the oil cooler 381 are in parallel relation to each other. Because the first bypass hydraulic line 380a is connected to the battery warming-up heat exchanger 352, a heat exchange is performed in the battery warming-up heat exchanger 352 between the heat medium flowing through the battery temperature adjusting circuit 350 and the hydraulic operating fluid flowing through the first bypass hydraulic line 380a.

The hydraulic operating fluid cooling circuit 380 is provided with the first hydraulic operating fluid control valve 385 that controls the flow rate of the hydraulic operating fluid flowing through the first bypass hydraulic line 380a. In the present embodiment, a solenoid valve provided to the first bypass hydraulic line 380a is illustrated as the first hydraulic operating fluid control valve 385. However, a configuration that can control the flow rate of the hydraulic operating fluid introduced into the battery warming-up heat exchanger 352 suffices, and the configuration of the first hydraulic operating fluid control valve 385 can be changed in design as appropriate. In the present embodiment, the flow passage of the first bypass hydraulic line 380a is adjusted in opening degree (opened and interrupted in the present example) by the first hydraulic operating fluid control valve 385, and the flow rate of the hydraulic operating fluid introduced into the battery warming-up heat exchanger 352 is thereby adjusted. The first hydraulic operating fluid control valve 385 is switching-controlled by the controller 90 according to the temperature of the hydraulic operating fluid measured by the hydraulic operating fluid temperature sensor 382 and the temperature of the heat medium of the battery temperature adjusting circuit 350 measured by the heat medium temperature sensor 355, and controls an amount of heat going into the heat medium of the battery temperature adjusting circuit 350 from the hydraulic operating fluid.

In addition, the hydraulic operating fluid cooling circuit 380 includes a second bypass hydraulic line 380b through which the hydraulic operating fluid is made to flow to the hydraulic operating fluid tank 53 so as to bypass the oil cooler 381. The second bypass hydraulic line 380b is connected to the electric apparatus warming-up heat exchanger 387 to be described later. The electric apparatus warming-up heat exchanger 387 and the oil cooler 381 are in parallel relation to each other. Because the second bypass hydraulic line 380b is connected to the electric apparatus warming-up heat exchanger 387, a heat exchange is performed in the electric apparatus warming-up heat exchanger 387 between an electric apparatus refrigerant (for example, water) flowing through the electric apparatus cooling circuit 370 and the hydraulic operating fluid flowing through the second bypass hydraulic line 380b.

The hydraulic operating fluid cooling circuit 380 is provided with a second hydraulic operating fluid control valve 386 that controls the flow rate of the hydraulic operating fluid flowing through the second bypass hydraulic line 380b. In the present embodiment, a solenoid valve provided to the second bypass hydraulic line 380b is illustrated as the second hydraulic operating fluid control valve 386. However, a configuration that can control the flow rate of the hydraulic operating fluid introduced into the electric apparatus warming-up heat exchanger 387 suffices, and the configuration of the second hydraulic operating fluid control valve 386 can be changed in design as appropriate. In the present embodiment, the flow passage of the second bypass hydraulic line 380b is adjusted in opening degree (opened and interrupted in the present example) by the second hydraulic operating fluid control valve 386, and the flow rate of the hydraulic operating fluid introduced into the electric apparatus warming-up heat exchanger 387 is thereby adjusted. The second hydraulic operating fluid control valve 386 is switching-controlled by the controller 90 according to the temperature of the hydraulic operating fluid measured by the hydraulic operating fluid temperature sensor 382 and the temperature of the electric apparatus refrigerant of the electric apparatus cooling circuit 370 measured by an electric apparatus refrigerant temperature sensor 377 to be described later, and controls an amount of heat going into the electric apparatus refrigerant from the hydraulic operating fluid.

In addition, in the electric apparatus warming-up heat exchanger 387, a heat exchange is performed between the electric apparatus refrigerant flowing through the electric apparatus cooling circuit 370 and the hydraulic operating fluid flowing through the hydraulic operating fluid cooling circuit 380. The electric apparatus warming-up heat exchanger 387 brings a flow passage through which the electric apparatus refrigerant moving from cooling targets (the electrically driven motor 50, the inverter 59, the DC-to-DC converter 60, and the vehicle-mounted charger 35) to a heater core 372 flows (flow passage from the electric apparatus warming-up heat exchanger 387 to an electric heater 373 in the present embodiment) (flow passage from the electrically driven motor 50 to the water-cooled condenser 368 in the present embodiment) in the electric apparatus cooling circuit 370 into contact with the second bypass hydraulic line 380b through which the hydraulic operating fluid moving from the second hydraulic operating fluid control valve 386 to the hydraulic operating fluid tank 53 flows in the hydraulic operating fluid cooling circuit 380. The electric apparatus warming-up heat exchanger 387 thereby makes the fluids passing through the respective flow passages exchange heat with each other. As in the battery cooling heat exchanger 351, within the electric apparatus warming-up heat exchanger 387, the respective flow passages of the electric apparatus cooling circuit 370 and the hydraulic operating fluid cooling circuit 380 which flow passages are made of a metal, for example, meander in a state of being in contact with each other, and heat is transferred with high efficiency from a high temperature side to a low temperature side of the fluids flowing through the respective flow passages. The temperature of the hydraulic operating fluid flowing through the hydraulic operating fluid cooling circuit 380 rises after passing through the hydraulic pump and various kinds of hydraulic apparatuses, and is higher than the temperature of the electric apparatus refrigerant flowing into the electric apparatus warming-up heat exchanger 387. The electric apparatus warming-up heat exchanger 387 therefore transfers heat from the hydraulic operating fluid of the hydraulic operating fluid cooling circuit 380 to the electric apparatus refrigerant of the electric apparatus cooling circuit 370.

The oil cooler 381 makes cooling air generated by the oil cooler electrically driven fan 240 and the hydraulic operating fluid passing through the main hydraulic line 380c exchange heat with each other in the main hydraulic line 380c through which the hydraulic operating fluid moving from the control valve 100 to the hydraulic operating fluid tank 53 flows in the hydraulic operating fluid cooling circuit 380. More specifically, a part of the main hydraulic line 380c passing through the oil cooler 381 is constituted by a heat transfer pipe of a material having a high heat transfer efficiency (for example, a metal) which heat transfer pipe is fitted with fins. In addition, the oil cooler electrically driven fan 240 is disposed such that the cooling air hits the fins constituting the oil cooler 381. As a result, the heat of the hydraulic operating fluid flowing through the heat transfer pipe in the oil cooler 381 is transferred to the cooling air, and the hydraulic operating fluid is cooled.

### - Cooling Refrigerant Circuit -

The cooling refrigerant circuit 360 is a circuit that circulates the cooling refrigerant (for example, R-1234yf). The cooling refrigerant circuit 360 has a cooling function of cooling air within the room of the cab 13A (FIG. 1) by using a refrigeration cycle and a function of cooling the heat medium of the battery temperature adjusting circuit 350 by using the battery cooling heat exchanger 351.

The cooling refrigerant circuit 360 is connected with the electrically driven compressor 45, a condenser 361, the receiver 362, a variable restrictor 363, an expansion valve 364, an HVAC evaporator 365, a variable restrictor 366, the expansion valve 367, a water-cooled condenser (heat exchanger) 368, and the battery cooling heat exchanger 351. That is, the cooling refrigerant circuit 360 has, on a path thereof, the electrically driven compressor 45, the water-cooled condenser (heat exchanger) 368, the condenser 361, the receiver 362, the variable restrictor 363, the expansion valve 364, the HVAC evaporator 365, the variable restrictor 366, the expansion valve 367, and the battery cooling heat exchanger 351. The electric apparatuses of the cooling refrigerant circuit 360 (such as the condenser electrically driven fan 230), including the electrically driven compressor 45, are driven by the electric power of the battery 30, for example.

The electrically driven compressor 45 compresses the cooling refrigerant. The high-temperature and high-pressure cooling refrigerant delivered from the electrically driven compressor 45 is sequentially cooled by the water-cooled condenser 368 and the condenser 361, and is thereby liquefied in a high pressure state. Specifically, the water-cooled condenser 368 is connected with the electric apparatus cooling circuit 370 in addition to the cooling refrigerant circuit 360. In the water-cooled condenser 368, the high-temperature and high-pressure cooling refrigerant delivered from the electrically driven compressor 45 is cooled by exchanging heat with the electric apparatus refrigerant of the electric apparatus cooling circuit 370. The condenser 361 is located downstream of the water-cooled condenser 368. The high-pressure cooling refrigerant cooled by the water-cooled condenser 368 is further cooled and condensed in the condenser 361 by the cooling air of the condenser electrically driven fan 230. Though the rotational speed of the condenser electrically driven fan 230 may be fixed, the rotational speed of the condenser electrically driven fan 230 is preferably variable according to the rotational speed of the electrically driven compressor 45. A target rotational speed of the condenser electrically driven fan 230 is in accordance with a demanded value of the battery cooling heat exchanger 351 (for example, a value corresponding to the measured value of the heat medium temperature sensor 355) and a demanded value of the HVAC evaporator 365 (a value corresponding to the room temperature of the cab 13A and the temperature of the cooling refrigerant).

The high-pressure cooling refrigerant after passing through the condenser 361 passes through the receiver 362. The receiver 362 separates a part of the cooling refrigerant not liquefied by the condenser 361 from the liquefied cooling refrigerant, and removes water and impurities from the separated cooling refrigerant by a drying agent and a strainer.

The high-pressure cooling refrigerant after passing through the receiver 362 passes through the expansion valve 364 of an electronic control type. The expansion valve 364 decompresses the high-pressure cooling refrigerant into a low-pressure cooling refrigerant. The cooling refrigerant decompressed by passing through the expansion valve 364 flows in a gas-liquid two-phase state into the HVAC evaporator 365.

The HVAC evaporator 365 is a heat exchanger that exchanges heat between the cooling refrigerant decompressed by the expansion valve 364 and outside air. The low-pressure cooling refrigerant evaporates by absorbing the heat of air in the room of the cab 13A. The air in the cab 13A is sucked by a blower fan (not illustrated) into a flow passage in which the HVAC evaporator 365 is disposed. Then, the air is cooled by passing through the HVAC evaporator 365, and is blown into the room of the cab 13A. The HVAC evaporator 365 functions as an air-conditioning heat exchanger for the cab 13A. The low-pressure cooling refrigerant evaporated by the HVAC evaporator 365 is sucked into the electrically driven compressor 45 again.

Here, the cooling refrigerant circuit 360 includes: a main refrigerant passage 360b through which the cooling refrigerant is made to flow via the HVAC evaporator 365; and the bypass refrigerant passage 360a that is connected to the main refrigerant passage 360b and through which the cooling refrigerant is made to flow so as to bypass the HVAC evaporator 365. The bypass refrigerant passage 360a is connected to the battery cooling heat exchanger 351. The battery cooling heat exchanger 351 is in parallel relation to the HVAC evaporator 365 in the cooling refrigerant circuit 360. The cooling refrigerant in a gas-liquid two-phase state decompressed by the expansion valve 367 absorbs the heat of the heat medium of the battery temperature adjusting circuit 350 when passing through the battery cooling heat exchanger 351. The battery cooling heat exchanger 351 thereby cools the heat medium of the battery temperature adjusting circuit 350.

The variable restrictors 363 and 366 of the cooling refrigerant circuit 360 are refrigerant control valves that adjust a flow rate ratio between the cooling refrigerant passing through the receiver 362 and flowing to the expansion valve 364 and the cooling refrigerant flowing to the expansion valve 367, and thereby control the flow rate of the cooling refrigerant flowing through the bypass refrigerant passage 360a. The variable restrictors 363 and 366 are provided on the downstream side of a branching portion of the bypass refrigerant passage 360a in the cooling refrigerant circuit 360. The variable restrictor 363 is located between the branching portion and the expansion valve 364. The variable restrictor 366 is located between the branching portion and the expansion valve 367. The variable restrictors 363 and 366 are adjusted in opening area by the controller 90 according to the temperature of the heat medium of the battery temperature adjusting circuit 350 measured by the heat medium temperature sensor 355, and thereby control an amount of heat extracted from the battery cooling heat exchanger 351. For example, when the temperature of the heat medium of the battery temperature adjusting circuit 350 is lower than a lower limit of a proper range preset, the opening area of the variable restrictor 366 is reduced, and thereby the flow rate of the cooling refrigerant flowing through the battery cooling heat exchanger 351 is reduced. At this time, the opening degree of the variable restrictor 363 may be maintained at a predetermined value. However, when the room temperature of the cab 13A is higher than a set temperature of air conditioning, the opening of the variable restrictor 363 may be expanded so as to prioritize air conditioning performance. Conversely, when the temperature of the heat medium of the battery temperature adjusting circuit 350 exceeds an upper limit of the proper range, the opening area of the variable restrictor 366 is increased, and the opening of the variable restrictor 363 is reduced, so that the flow rate of the cooling refrigerant flowing through the battery cooling heat exchanger 351 is increased. The opening degrees of the variable restrictors 363 and 366 are maintained when the temperature of the heat medium of the battery temperature adjusting circuit 350 is in the proper range.

Incidentally, in the water-cooled condenser 368, a heat exchange is performed between the cooling refrigerant flowing through the cooling refrigerant circuit 360 and the electric apparatus refrigerant flowing through the electric apparatus cooling circuit 370. Though the electric apparatus cooling circuit 370 will be described later, the water-cooled condenser 368 brings a flow passage through which the cooling refrigerant moving from the electrically driven compressor 45 to the receiver 362 flows (flow passage from the electrically driven compressor 45 to the condenser 361 in the present embodiment) in the cooling refrigerant circuit 360 into contact with a flow passage through which the electric apparatus refrigerant moving from the electrically driven motor 50 to the heater core 372 flows (flow passage from the electric apparatus warming-up heat exchanger 387 to the electric heater 373 in the present embodiment) in the electric apparatus cooling circuit 370. The water-cooled condenser 368 thereby makes the fluids passing through the respective flow passages exchange heat with each other. As in the battery cooling heat exchanger 351, within the water-cooled condenser 368, the respective flow passages of the cooling refrigerant circuit 360 and the electric apparatus cooling circuit 370 which flow passages are made of a metal, for example, meander in a state of being in contact with each other, and heat is transferred with high efficiency from a high temperature side to a low temperature side of the fluids flowing through the respective flow passages. The temperature of the cooling refrigerant compressed by the electrically driven compressor 45 in the cooling refrigerant circuit 360 rises and is high than the electric apparatus refrigerant flowing into the water-cooled condenser 368. The water-cooled condenser 368 therefore transfers heat from the cooling refrigerant of the cooling refrigerant circuit 360 to the electric apparatus refrigerant of the electric apparatus cooling circuit 370.

In a flow passage through which the cooling refrigerant moving from the water-cooled condenser (heat exchanger) 368 to the receiver 362 flows in the cooling refrigerant circuit 360, the condenser 361 makes the cooling air of the condenser electrically driven fan 230 and the cooling refrigerant passing through the flow passage exchange heat with each other. More specifically, the flow passage through which the cooling refrigerant flows in the condenser 361 is formed by a heat transfer pipe made of a metal, for example, which heat transfer pipe is fitted with fins. In addition, the condenser electrically driven fan 230 is disposed such that the cooling air hits the fins constituting the condenser 361. As a result, the heat of the cooling refrigerant flowing through the heat transfer pipe in the condenser 361 is transferred to the cooling air, and the cooling refrigerant is cooled.

### - Electric Apparatus Cooling Circuit -

The electric apparatus cooling circuit 370 is a circuit that circulates the electric apparatus refrigerant (for example, water) for cooling the electrically driven motor 50 and the electrically driven motor control system (the inverter 59, the DC-to-DC converter 60, the vehicle-mounted charger 35, and the like). The electric apparatus cooling circuit 370 is connected with the electrically driven motor 50, the inverter 59, the vehicle-mounted charger 35, the DC-to-DC converter 60, a water pump 371, the electric apparatus warming-up heat exchanger 387, the water-cooled condenser 368, the electric heater 373 for the electric apparatus cooling circuit, the heater core 372 for heating, a radiator 375, and the electric apparatus refrigerant temperature sensor 377. That is, the electric apparatus cooling circuit 370 has, on a path thereof, the electrically driven motor 50, the electric apparatus refrigerant temperature sensor 377, the electric apparatus warming-up heat exchanger 387, the water-cooled condenser 368, the electric heater 373, the heater core 372, the radiator 375, the water pump 371, the vehicle-mounted charger 35, the DC-to-DC converter 60, and the inverter 59. The electric apparatuses of the electric apparatus cooling circuit 370 (such as the water pump 371 and the radiator electrically driven fan 220), including the electric heater 373, are driven by the electric power of the battery 30, for example.

The electric apparatus refrigerant circulates through the electric apparatus cooling circuit 370. The temperature of the electric apparatus refrigerant rises by absorbing heat in the electrically driven motor 50, the inverter 59, the DC-to-DC converter 60, the vehicle-mounted charger 35, and the water-cooled condenser 368 as cooling targets and the like, and is thereafter heated by the electric apparatus warming-up heat exchanger 387 and the electric heater 373 as needed. The electric apparatus refrigerant circulating through the electric apparatus cooling circuit 370 radiates heat at the heater core 372 for heating, and is thereafter cooled by the radiator 375 located downstream of the heater core 372. In the present embodiment, the electric apparatus refrigerant temperature sensor 377 is located between the cooling targets (the electrically driven motor 50, the inverter 59, the DC-to-DC converter 60, and the vehicle-mounted charger 35) and the electric apparatus warming-up heat exchanger 387. The electric apparatus refrigerant temperature sensor 377 thus measures the temperature of the electric apparatus refrigerant the temperature of which has increased by cooling the cooling targets and which has not been additionally heated by another heating device such as the electric apparatus warming-up heat exchanger 387.

The hydraulic excavator 1 operates by driving the main pump 51 by the electrically driven motor 50. Thus, while the hydraulic excavator 1 is performing work by driving the hydraulic actuators, the temperatures of the electrically driven motor 50, the inverter 59, and the DC-to-DC converter 60 rise. During charging of the battery 30, the temperature of the vehicle-mounted charger 35 rises. Hence, during the work and during the charging, the electric apparatus cooling circuit 370 is actuated to prevent each of the electrically driven motor 50, the inverter 59, the DC-to-DC converter 60, and the vehicle-mounted charger 35 from going into an overheated state (for example, 70°C or higher), and each of the electrically driven motor 50, the inverter 59, the DC-to-DC converter 60, and the vehicle-mounted charger 35 is cooled by the electric apparatus refrigerant flowing through the electric apparatus cooling circuit 370. The electric apparatus refrigerant is circulated to flow through the electric apparatus cooling circuit 370 by the water pump 371, absorbs heat from the cooling targets such as the electrically driven motor 50, resulting in temperature rise, and is cooled by the cooling air of the radiator electrically driven fan 220 when passing through the radiator 375.

Incidentally, the electrically driven motor 50, the inverter 59, the DC-to-DC converter 60, and the vehicle-mounted charger 35 are provided with temperature sensors that measure the respective temperatures thereof. The radiator electrically driven fan 220 is feedback-controlled by the controller 90 according to outputs of these temperature sensors. For example, when the temperature of at least one of the electrically driven motor 50, the inverter 59, the DC-to-DC converter 60, and the vehicle-mounted charger 35 is equal to or higher than a first set temperature (for example, 70°C or a value set lower than 70°C), the rotational speed of the radiator electrically driven fan 220 is increased. When the temperatures of all of the electrically driven motor 50, the inverter 59, the DC-to-DC converter 60, and the vehicle-mounted charger 35 are lower than a second set temperature (for example, the first set temperature or a value set lower than the first set temperature), the rotational speed of the radiator electrically driven fan 220 is reduced. However, the radiator electrically driven fan 220 may be configured to be stopped even during work or during charging, for example, when the temperature of the outside air is significantly low and the temperature of the electric apparatus refrigerant is lower than a set temperature preset (for example, a lower limit value of proper usage temperatures of the electric apparatuses or a value set higher than the lower limit value).

In contrast, in the present embodiment, the heater core 372 for heating is connected to the electric apparatus cooling circuit 370. The heater core 372 is provided within the room of the cab 13A, and warms up the air blown into the room of the cab 13A by a blower fan (not illustrated). The heater core 372 functions as a heat exchanger for heating the cab 13A. The electric apparatus refrigerant passing through the heater core 372 is therefore preferably high in temperature (for example, 80°C).

Accordingly, in the electric apparatus cooling circuit 370, the electric heater 373 for heating the electric apparatus refrigerant is provided in a path in which the electric apparatus refrigerant passes through the electric apparatuses (the electrically driven motor 50, the inverter 59, the DC-to-DC converter 60, the vehicle-mounted charger 35, and the like) and reaches the heater core 372. The electric heater 373 is configured to adjust the electric apparatus refrigerant to a temperature that can be used by the heater core 372. It is desirable from a viewpoint of energy efficiency to use the heat of the electric apparatus refrigerant for heating. The temperature of the heater core 372 is sensed by a temperature sensor (not illustrated). The electric heater 373 is feedback-controlled by the controller 90 according to the output of the temperature sensor. For example, when the temperature of the heater core 372 is equal to or higher than a set temperature (for example, 80°C), the electric heater 373 is turned OFF, and when the temperature of the heater core 372 is lower than the set temperature, the electric heater 373 is turned ON.

The electric apparatus warming-up heat exchanger 387 has a configuration similar to that of the battery warming-up heat exchanger 352. As described above, the hydraulic operating fluid cooling circuit 380 includes the second bypass hydraulic line 380b through which the hydraulic operating fluid is made to bypass the oil cooler 381 and flow to the hydraulic operating fluid tank 53. The second bypass hydraulic line 380b is connected to the electric apparatus warming-up heat exchanger 387. Thus, in the electric apparatus warming-up heat exchanger 387, a heat exchange is performed between the electric apparatus refrigerant flowing through the electric apparatus cooling circuit 370 and the hydraulic operating fluid flowing through the second bypass hydraulic line 380b. As described above, the second bypass hydraulic line 380b is provided with the second hydraulic operating fluid control valve 386, and the flow rate of the hydraulic operating fluid introduced into the electric apparatus warming-up heat exchanger 387 is adjusted by opening or interrupting the flow passage of the second bypass hydraulic line 380b by the second hydraulic operating fluid control valve 386. The second hydraulic operating fluid control valve 386 is switching-controlled by the controller 90 according to the temperature of the hydraulic operating fluid measured by the hydraulic operating fluid temperature sensor 382 and the temperature of the electric apparatus refrigerant of the electric apparatus warming-up heat exchanger 387 measured by the electric apparatus refrigerant temperature sensor 377, and controls an amount of heat going into the electric apparatus refrigerant of the electric apparatus cooling circuit 370 from the hydraulic operating fluid. This reduces an amount of heating required by the electric heater 373 in order to adjust the temperature of the heater core 372 to the set temperature at a time of heating, and consequently reduces the electric power consumption of the hydraulic excavator 1 (for example, the electric power consumption of the battery 30). In addition, an amount of heat radiation of the oil cooler 381 can also be suppressed by utilizing the waste heat of the hydraulic operating fluid. It is therefore possible to reduce also the electric power consumption of the oil cooler electrically driven fan 240. In addition, heater performance at a time of a low temperature is enhanced, so that the operation environment of the operator is improved.

The water-cooled condenser 368 is a heat exchanger that is connected to the electric apparatus cooling circuit 370 and that effects a heat exchange between the cooling refrigerant compressed by the compressor 45 in the cooling refrigerant circuit 360 and the electric apparatus refrigerant flowing downstream of the electrically driven motor 50 and upstream of the heater core 372. The cooling refrigerant delivered from the electrically driven compressor 45 in the cooling refrigerant circuit 360 has a high temperature and a high pressure. The water-cooled condenser 368 transfers heat from the high-temperature and high-pressure cooling refrigerant delivered from the electrically driven compressor 45 to the electric apparatus refrigerant flowing through the electric apparatus cooling circuit 370. The water-cooled condenser 368 plays roles similar to those of the electric apparatus warming-up heat exchanger 387. That is, an amount of heating required by the electric heater 373 at a time of heating is suppressed, and consequently, the electric power consumption of the hydraulic excavator 1 (for example, the electric power consumption of the battery 30) is reduced. In addition, heater performance at a time of a low temperature is enhanced, so that the operation environment of the operator is improved. In addition, because the temperature of the cooling refrigerant falls in the water-cooled condenser 368, an amount of heat radiation of the cooling refrigerant required by the condenser 361 in the cooling refrigerant circuit 360 can be reduced, which also leads to a reduction in the electric power consumption of the condenser electrically driven fan 230.

In a flow passage through which the electric apparatus refrigerant moving from the heater core 372 to the water pump 371 flows in the electric apparatus cooling circuit 370, the radiator 375 makes the cooling air of the radiator electrically driven fan 220 and the electric apparatus refrigerant passing through the flow passage exchange heat with each other. More specifically, the flow passage through which the electric apparatus refrigerant flows in the radiator 375 is constituted by a heat transfer pipe made of a metal, for example, which heat transfer pipe is fitted with fins. In addition, the radiator electrically driven fan 220 is disposed such that the cooling air hits the fins constituting the radiator 375. As a result, the heat of the electric apparatus refrigerant flowing through the heat transfer pipe in the radiator 375 is transferred to the cooling air, and the electric apparatus refrigerant is cooled.

### (Control)

### - First Hydraulic Operating Fluid Control Valve -

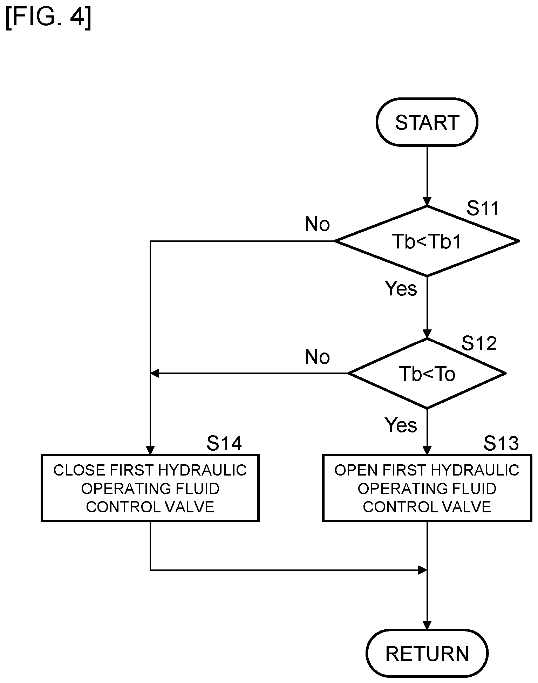

FIG. 4 is a flowchart illustrating an example of a procedure of controlling the first hydraulic operating fluid control valve 385 by the controller 90. The controller 90 periodically repeats the flow of FIG. 4 during energization. When the power is turned off, the controller 90 performs delay processing and the like as appropriate and ends the flow of FIG. 4.

Starting the flow of FIG. 4, the controller 90 determines whether a present heat medium temperature Tb of the battery temperature adjusting circuit 350 measured by the heat medium temperature sensor 355 is lower than a set temperature Tb1 preset (for example, a lower limit value of a proper range preset for the heat medium temperature Tb) (Tb < Tb1) (step S11). When the heat medium temperature Tb is equal to or higher than the set temperature Tb1 (Tb ≥ Tb1), and thus the heat medium does not need to be heated in order to set the battery 30 at a proper temperature (No), the controller 90 closes the first hydraulic operating fluid control valve 385, and thereby stops the supply of the hydraulic operating fluid to the battery warming-up heat exchanger 352 (step S14). When the heat medium temperature Tb is lower than the set temperature Tb1 (Tb < Tb1), and thus the heat medium needs to be heated in order to set the battery 30 at a proper temperature (Yes), the controller 90 determines whether the heat medium temperature Tb is lower than a present hydraulic operating fluid temperature To measured by the hydraulic operating fluid temperature sensor 382 (Tb < To) (step S12). When the heat medium temperature Tb is equal to or higher than the hydraulic operating fluid temperature To (Tb ≥ To), and therefore the heating of the heat medium by the hydraulic operating fluid is not possible (No), the controller 90 closes the first hydraulic operating fluid control valve 385, and stops the supply of the hydraulic operating fluid to the battery warming-up heat exchanger 352 (step S14). When the heat medium temperature Tb is lower than the hydraulic operating fluid temperature To (Tb < To), and therefore the heating of the heat medium by the hydraulic operating fluid is possible (Yes), the controller 90 opens the first hydraulic operating fluid control valve 385 to supply the hydraulic operating fluid to the battery warming-up heat exchanger 352 (step S13). After controlling the first hydraulic operating fluid control valve 385 by performing the processing of step S13 or step S14, the controller 90 returns the procedure to step S11. Incidentally, determination order of steps S11 and S12 can be changed as appropriate.

As in the above example, the controller 90 controls the first hydraulic operating fluid control valve 385 on the basis of the outputs of the hydraulic operating fluid temperature sensor 382 and the heat medium temperature sensor 355. The heat medium temperature Tb of the battery temperature adjusting circuit 350 is thereby maintained so as not to be lower than the lower limit value for setting the battery 30 at a proper temperature.

Incidentally, in parallel with the control of FIG. 4, the controller 90 also performs control of cooling of the heat medium of the battery temperature adjusting circuit 350 by the battery cooling heat exchanger 351. An amount of heat transfer in the battery cooling heat exchanger 351 is adjusted by the variable restrictors 363 and 366 of the cooling refrigerant circuit 360, or the like. For example, when the temperature of the heat medium of the battery temperature adjusting circuit 350 is lower than a lower limit of a proper range preset, the opening area of the variable restrictor 366 is reduced, and thereby the flow rate of the cooling refrigerant flowing through the battery cooling heat exchanger 351 is reduced. At this time, the opening degree of the variable restrictor 363 may be maintained at a predetermined value. However, when the room temperature of the cab 13A is higher than a set temperature of air conditioning, the opening of the variable restrictor 363 may be expanded so as to prioritize air conditioning performance. Conversely, when the temperature of the heat medium of the battery temperature adjusting circuit 350 exceeds an upper limit of the proper range, the opening of the variable restrictor 366 is increased, and the opening of the variable restrictor 363 is reduced, so that the flow rate of the cooling refrigerant flowing through the battery cooling heat exchanger 351 is increased. When the temperature of the heat medium of the battery temperature adjusting circuit 350 is in the proper range, the temperature of the heat medium of the battery temperature adjusting circuit 350 is maintained, and the opening degrees of the variable restrictors 363 and 366 are maintained.

In addition, a target rotational speed of the condenser electrically driven fan 230 is set according to, for example, a demanded value of the battery cooling heat exchanger 351 corresponding to a measured value of the heat medium temperature sensor 355 and a demanded value of the HVAC evaporator 365 corresponding to the room temperature of the cab 13A and the temperature of the cooling refrigerant. The controller 90 controls the rotational speed of the condenser electrically driven fan 230 to the target rotational speed.

### - Second Hydraulic Operating Fluid Control Valve -

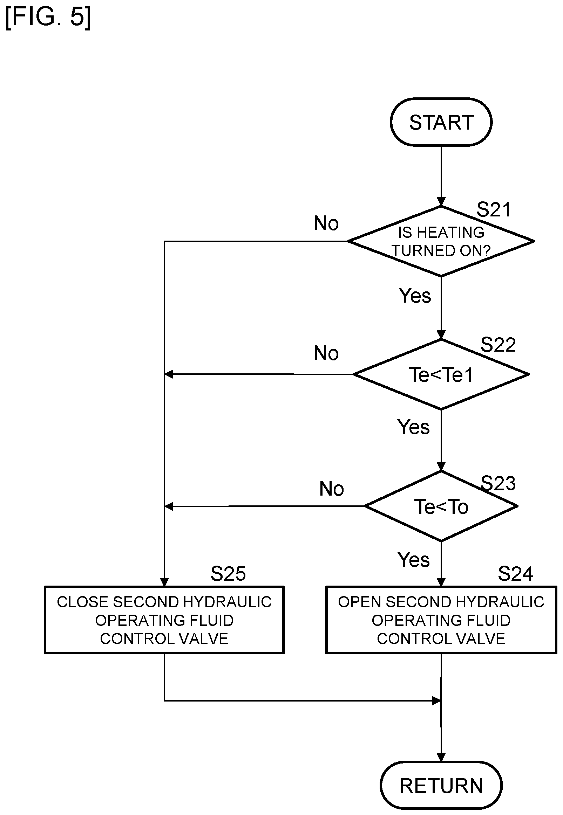

FIG. 5 is a flowchart illustrating an example of a procedure of controlling the second hydraulic operating fluid control valve 386 by the controller 90. The controller 90 periodically repeats the flow of FIG. 5 during energization in parallel with the flow of FIG. 4. When the power is turned off, the controller 90 performs delay processing and the like as appropriate and ends the flow of FIG. 5.

When the flow of FIG. 5 is started, the controller 90 determines whether heating is turned ON on the basis of an operation signal of an air conditioning operation device (not illustrated) installed within the room of the cab 13A (step S21). When the heating is not turned on (heating OFF), and therefore the electric apparatus refrigerant does not need to be heated (No), the controller 90 closes the second hydraulic operating fluid control valve 386, and thereby stops the supply of the hydraulic operating fluid to the electric apparatus warming-up heat exchanger 387 (step S25). When the heating is turned on (heating ON), and therefore the electric apparatus refrigerant needs to be heated (Yes), the controller 90 determines whether a present electric apparatus refrigerant temperature Te of the battery temperature adjusting circuit 350 measured by the electric apparatus refrigerant temperature sensor 377 is lower than a set temperature Te1 preset (for example, a lower limit value of a proper range preset for the electric apparatus refrigerant temperature Te) (Te < Te1) (step S22). When the electric apparatus refrigerant temperature Te is equal to or higher than the set temperature Te1 (Te ≥ Te1), and therefore the electric apparatus refrigerant does not need to be heated in order to set each electric apparatus at a proper temperature (No), the controller 90 closes the second hydraulic operating fluid control valve 386, and thereby stops the supply of the hydraulic operating fluid to the electric apparatus warming-up heat exchanger 387 (step S25). When the electric apparatus refrigerant temperature Te is lower than the set temperature Te1 (Te < Te1), and therefore the electric apparatus refrigerant needs to be heated in order to set each electric apparatus at a proper temperature (Yes), the controller 90 determines whether the electric apparatus refrigerant temperature Te is lower than the present hydraulic operating fluid temperature To measured by the hydraulic operating fluid temperature sensor 382 (Te < To) (step S23). When the electric apparatus refrigerant temperature Te is equal to or higher than the hydraulic operating fluid temperature To (Te ≥ To), and therefore the heating of the electric apparatus refrigerant by the hydraulic operating fluid is not possible (No), the controller 90 closes the second hydraulic operating fluid control valve 386, and thereby stops the supply of the hydraulic operating fluid to the electric apparatus warming-up heat exchanger 387 (step S25). When the electric apparatus refrigerant temperature Te is lower than the hydraulic operating fluid temperature To (Te < To), and therefore the heating of the electric apparatus refrigerant by the hydraulic operating fluid is possible (Yes), the controller 90 opens the second hydraulic operating fluid control valve 386, and thereby supplies the hydraulic operating fluid to the electric apparatus warming-up heat exchanger 387 (step S24). After controlling the second hydraulic operating fluid control valve 386 by performing the processing of step S24 or step S25, the controller 90 returns the procedure to step S22. Incidentally, determination order of steps S21 to S23 can be changed as appropriate.

As in the above example, the controller 90 controls the second hydraulic operating fluid control valve 386 on the basis of the outputs of the hydraulic operating fluid temperature sensor 382 and the electric apparatus refrigerant temperature sensor 377. The electric apparatus refrigerant temperature Te of the electric apparatus cooling circuit 370 is thereby maintained so as not to be lower than the lower limit value for setting each electric apparatus such as the electrically driven motor 50 at a proper temperature.

Incidentally, in parallel with the control of FIG. 5, the controller 90 also performs control of the radiator electrically driven fan 220 and the electric heater 373 as described above in order to control the temperature of the electric apparatus refrigerant.

For example, when the temperature of at least one of the electrically driven motor 50, the inverter 59, the DC-to-DC converter 60, and the vehicle-mounted charger 35 is equal to or higher than a first set temperature (for example, 70°C or a value set lower than 70°C), the controller 90 increases the rotational speed of the radiator electrically driven fan 220. When the temperatures of all of the electrically driven motor 50, the inverter 59, the DC-to-DC converter 60, and the vehicle-mounted charger 35 are lower than a second set temperature (for example, the first set temperature or a value set lower than the first set temperature), the controller 90 reduces the rotational speed of the radiator electrically driven fan 220. The controller 90 may be configured to stop the radiator electrically driven fan 220 even during work or during charging when the temperature of the outside air is significantly low and the temperature of the electric apparatus refrigerant is lower than a set temperature preset (for example, a lower limit value of proper usage temperatures of the electric apparatuses or a value set higher than the lower limit value).

In addition, when the heating is turned ON, the controller 90 feedback-controls the electric heater 373 according to the temperature of the heater core 372. For example, the electric heater 373 is turned OFF when the temperature of the heater core 372 is equal to or higher than a set temperature (for example, 80°C), and the electric heater 373 is turned ON when the temperature of the heater core 372 is lower than the set temperature. When the heating is turned OFF, the controller 90 sets the electric heater 373 to OFF.

### (Effects)

(1) In the present embodiment, the battery temperature adjusting circuit 350 that circulates the heat medium for adjusting the temperature of the battery 30 is provided, and the battery temperature adjusting circuit 350 is connected with the electric heater 353 for heating the heat medium, the battery cooling heat exchanger 351 for cooling the heat medium by making the heat medium exchange heat with the cooling refrigerant, and the battery warming-up heat exchanger 352 for heating the heat medium by making the heat medium exchange heat with the hydraulic operating fluid. Hence, the heat medium for adjusting the battery temperature can be cooled by the heat exchange with the cooling refrigerant to suppress an overheating of the battery 30. In addition, the heat medium for adjusting the battery temperature can be heated by the waste heat of the hydraulic operating fluid and the electric heater 353 to warm up the battery 30. It is thus possible to maintain the battery 30 at a proper temperature, and thereby suppress a degradation of the battery 30 and maintain an appropriate output power state. In addition, the use of the waste heat of the hydraulic operating fluid as a heating source of the heat medium for adjusting the battery temperature can suppress the electric power consumption of the electric heater 353, and can also reduce the electric power consumption of the battery 30 when the electric heater 353 is driven by the electric power of the battery 30. In addition, because the waste heat of the hydraulic operating fluid can be added as the heating source of the heat medium to the heat of the electric heater 353, even when the temperature of the outside air is low and the temperature of the heat medium is significantly low, the temperature of the heat medium can be increased to a predetermined temperature quickly as compared with a case where the heat medium is heated by only the electric heater 353. Thus, according to the present embodiment, it is possible to achieve both a cooling performance and a heating performance for the battery 30 of the hydraulic excavator 1, and suppress a decrease in energy efficiency due to the warming up of the battery 30.
   Further, heat is released from the hydraulic operating fluid to the heat medium for adjusting the battery temperature, and thus an amount of heat radiation of the oil cooler 381 can also be suppressed. An energy saving effect is consequently obtained also in the hydraulic operating fluid cooling circuit 380. For example, it is possible to suppress the electric power consumption of the oil cooler electrically driven fan 240, and contribute also to a further reduction in the electric power consumption of the battery 30 when the oil cooler electrically driven fan 240 is driven by the electric power of the battery 30. In addition, many parts of the cooling circuit 300 are constituted by existing parts, and therefore an increase in cost due to an increase in the number of parts can also be suppressed.
(2) The control of the first hydraulic operating fluid control valve 385 by the controller 90 on the basis of the outputs of the heat medium temperature sensor 355 and the hydraulic operating fluid temperature sensor 382 can prevent the temperature of the heat medium flowing through the battery temperature adjusting circuit 350 from becoming lower than a temperature necessary to maintain the battery 30 at a proper temperature. In addition, when the heat medium of the battery temperature adjusting circuit 350 does not need to be heated, the supply of the hydraulic operating fluid to the battery warming-up heat exchanger 352 can be stopped by closing the first hydraulic operating fluid control valve 385.
(3) The cooling refrigerant circuit 360 is provided with the bypass refrigerant passage 360a bypassing the HVAC evaporator 365 and connected to the battery cooling heat exchanger 351, and is provided with the refrigerant control valves (variable restrictors 363 and 366) that control the flow rate of the cooling refrigerant flowing through the bypass refrigerant passage 360a, so that a flow rate ratio can be adjusted between the cooling refrigerant flowing through the HVAC evaporator 365 and the cooling refrigerant flowing through the battery cooling heat exchanger 351. This makes it possible to give priority to the cooling of the battery 30 or give priority to cooling performance, and thus operate the cooling circuit 300 flexibly.
(4) In configuring the electric apparatus cooling circuit 370 that circulates the electric apparatus refrigerant for cooling the electrically driven motor control system such as the inverter 59 and the electrically driven motor 50, a configuration is adopted in which the electric apparatus cooling circuit 370 is connected with the heater core 372 for heating, the electric heater 373 for heating the electric apparatus refrigerant, and the electric apparatus warming-up heat exchanger 387 for heating the electric apparatus refrigerant by making the electric apparatus refrigerant exchange heat with the hydraulic operating fluid. The hydraulic operating fluid cooling circuit 380 is provided with the second bypass hydraulic line 380b through which the hydraulic operating fluid is made to flow so as to bypass the oil cooler 381, and the second bypass hydraulic line 380b is connected to the electric apparatus warming-up heat exchanger 387. The electric apparatus warming-up heat exchanger 387 is thus configured such that a heat exchange is performed between the hydraulic operating fluid flowing through the hydraulic operating fluid cooling circuit 380 and the electric apparatus refrigerant flowing through the electric apparatus cooling circuit 370.

A construction machine having an engine (internal combustion engine) can use engine cooling water heated by the engine as a heat medium for heating. However, the hydraulic excavator 1 according to the present embodiment is an electrically driven work machine using the electric power of the battery 30 as a driving source, and therefore cannot use the engine cooling water. Accordingly, in the present embodiment, the electric apparatus cooling circuit 370 is configured such that the temperature of the electric apparatus refrigerant that has risen by cooling the electric apparatuses (the electrically driven motor 50, the inverter 59, the DC-to-DC converter 60, the vehicle-mounted charger 35, and the like) is adjusted by the electric heater 373 so as to be usable as a heat medium for heating, and the electric apparatus refrigerant can be used by the heater core 372. Thus utilizing the heat of the electric apparatus refrigerant necessitated by the electrically driven work machine for heating obviates a need for mounting a new circuit for heating, and is also advantageous from a viewpoint of energy efficiency.

In addition, the electric apparatus warming-up heat exchanger 387 is connected to the electric apparatus cooling circuit 370, so that the electric apparatus refrigerant can be heated by a heat exchange with the hydraulic operating fluid when necessary. An amount of heating required by the electric heater 373 in order to adjust the temperature of the heater core 372 to a set temperature at a time of heating is thereby suppressed, so that the electric power consumption of the hydraulic excavator 1 (for example, the electric power consumption of the battery 30) can be suppressed. At the same time, the release of the waste heat of the hydraulic operating fluid into the electric apparatus refrigerant also decreases an amount of heat radiation necessary at the oil cooler 381, and can also reduce the electric power consumption of the oil cooler electrically driven fan 240. In addition, the improvement in heating capability for the electric apparatus refrigerant also improves heating performance, which also leads to an improvement in the operation environment of the operator under an environment of a low outside air temperature.

(5) Because the second hydraulic operating fluid control valve 386 is controlled by the controller 90 on the basis of the outputs of the hydraulic operating fluid temperature sensor 382 and the electric apparatus refrigerant temperature sensor 377, the electric apparatus refrigerant can be heated by opening the second hydraulic operating fluid control valve 386 and thus supplying the hydraulic operating fluid to the electric apparatus warming-up heat exchanger 387 when necessary (when heating is ON), whereas the heating of the electric apparatus refrigerant can be automatically stopped by closing the second hydraulic operating fluid control valve 386 and thus stopping the supply of the hydraulic operating fluid to the electric apparatus warming-up heat exchanger 387 when not necessary (when heating is OFF).

(6) In addition, because the water-cooled condenser 368 that heats the electric apparatus refrigerant by a heat exchange with the cooling refrigerant is connected to the electric apparatus cooling circuit 370, the amount of heating required by the electric heater 373 at a time of heating is further suppressed, so that the electric power consumption of the hydraulic excavator 1 (for example, the electric power consumption of the battery 30) is reduced. In addition, the improvement in heating capability for the electric apparatus refrigerant also improves heating performance, which also leads to an improvement in the operation environment of the operator under an environment of a low outside air temperature. In addition, because the temperature of the cooling refrigerant falls in the water-cooled condenser 368, an amount of heat radiation of the cooling refrigerant required for the condenser 361 in the cooling refrigerant circuit 360 is reduced, which contributes also to a reduction in the electric power consumption of the condenser electrically driven fan 230. The electric power consumption of the battery 30 is also reduced when the driving source of the condenser electrically driven fan 230 is the battery 30.

### (Modifications)

The present invention is not limited to the foregoing embodiment, but can include various modifications. For example, the present invention is not necessarily limited to configurations including all of the configurations described in the foregoing embodiment. For example, a part of a configuration can be replaced with another configuration. In addition, a part of a configuration of the embodiment can be omitted, or another configuration can be added. In addition, while description has been made by taking the hydraulic excavator 1 as an example of an electrically driven construction machine to which the invention is applied, the present invention is applicable also to other construction machines such as a wheel loader.

### Description of Reference Characters

1: Hydraulic excavator (electrically driven work machine)
30: Battery
50: Electrically driven motor
51: Main pump (hydraulic pump)
54, 55: Directional control valve
90: Controller
112: Travelling motor (hydraulic actuator)
120: Swing motor (hydraulic actuator)
350: Battery temperature adjusting circuit
351: Battery cooling heat exchanger
352: Battery warming-up heat exchanger
353: Electric heater
355: Heat medium temperature sensor
360: Cooling refrigerant circuit
360a: Bypass refrigerant passage
360b: Main refrigerant passage
363: Variable restrictor (refrigerant control valve)
365: HVAC evaporator
366: Variable restrictor (refrigerant control valve)
368: Water-cooled condenser (heat exchanger)
370: Electric apparatus cooling circuit
372: Heater core
373: Electric heater (heater)
377: Electric apparatus refrigerant temperature sensor
380: Hydraulic operating fluid cooling circuit
380a: First bypass hydraulic line
380b: Second bypass hydraulic line
380c: Main hydraulic line
381: Oil cooler
382: Hydraulic operating fluid temperature sensor
385: First hydraulic operating fluid control valve
386: Second hydraulic operating fluid control valve
387: Electric apparatus warming-up heat exchanger
410: Boom cylinder (hydraulic actuator)
420: Arm cylinder (hydraulic actuator)
430: Bucket cylinder (hydraulic actuator)

## Claims

1. An electrically driven work machine comprising:
a battery;
an electrically driven motor that uses electric power of the battery as a driving source;
a hydraulic pump that is driven by the electrically driven motor and that pumps a hydraulic operating fluid into a hydraulic actuator;
a hydraulic operating fluid cooling circuit having an oil cooler that cools the hydraulic operating fluid;
a cooling refrigerant circuit that circulates a cooling refrigerant; and
a battery temperature adjusting circuit that circulates a heat medium that adjusts a temperature of the battery,
the battery temperature adjusting circuit having
an electric heater that heats the heat medium,
a battery cooling heat exchanger that cools the heat medium by making the heat medium exchange heat with the cooling refrigerant circulating through the cooling refrigerant circuit, and
a battery warming-up heat exchanger that heats the heat medium by making the heat medium exchange heat with the hydraulic operating fluid flowing through the hydraulic operating fluid cooling circuit.

2. The electrically driven work machine according to claim 1,
wherein the hydraulic operating fluid cooling circuit includes a main hydraulic line through which the hydraulic operating fluid is made to flow via the oil cooler and a first bypass hydraulic line that is connected to the main hydraulic line and through which the hydraulic operating fluid is made to flow so as to bypass the oil cooler, and
the first bypass hydraulic line is connected to the battery warming-up heat exchanger.

3. The electrically driven work machine according to claim 2, comprising:
a first hydraulic operating fluid control valve that controls a flow rate of the hydraulic operating fluid flowing through the first bypass hydraulic line;
a controller that controls the first hydraulic operating fluid control valve;
a hydraulic operating fluid temperature sensor that measures a temperature of the hydraulic operating fluid; and
a heat medium temperature sensor that measures a temperature of the heat medium flowing through the battery temperature adjusting circuit,
wherein the controller controls the first hydraulic operating fluid control valve on a basis of outputs of the hydraulic operating fluid temperature sensor and the heat medium temperature sensor.

4. The electrically driven work machine according to claim 1,
wherein the cooling refrigerant circuit includes
a main refrigerant passage through which the cooling refrigerant is made to flow via an HVAC evaporator,
a bypass refrigerant passage that is connected to the main refrigerant passage and that is connected to the battery cooling heat exchanger so as to bypass the HVAC evaporator, and
a refrigerant control valve that controls a flow rate of the cooling refrigerant flowing through the bypass refrigerant passage.

5. The electrically driven work machine according to claim 1, comprising:
an electric apparatus cooling circuit that circulates an electric apparatus refrigerant that cools the electrically driven motor,
wherein the electric apparatus cooling circuit includes
a heater that heats the electric apparatus refrigerant,
a heater core for heating, and
an electric apparatus warming-up heat exchanger that heats the electric apparatus refrigerant by making the electric apparatus refrigerant exchange heat with the hydraulic operating fluid flowing through the hydraulic operating fluid cooling circuit,
the hydraulic operating fluid cooling circuit includes a main hydraulic line through which the hydraulic operating fluid is made to flow via the oil cooler and a second bypass hydraulic line that is connected to the main hydraulic line and through which the hydraulic operating fluid is made to flow so as to bypass the oil cooler, and
the second bypass hydraulic line is connected to the electric apparatus warming-up heat exchanger.

6. The electrically driven work machine according to claim 5, comprising:
a second hydraulic operating fluid control valve that controls a flow rate of the hydraulic operating fluid flowing through the second bypass hydraulic line;
a controller that controls the second hydraulic operating fluid control valve;
a hydraulic operating fluid temperature sensor that measures a temperature of the hydraulic operating fluid; and
an electric apparatus refrigerant temperature sensor that measures a temperature of the electric apparatus refrigerant,
wherein the controller controls the second hydraulic operating fluid control valve on a basis of outputs of the hydraulic operating fluid temperature sensor and the electric apparatus refrigerant temperature sensor.

7. The electrically driven work machine according to claim 5,
wherein the electric apparatus cooling circuit has a heat exchanger that effects a heat exchange between the cooling refrigerant compressed by a compressor in the cooling refrigerant circuit and the electric apparatus refrigerant flowing downstream of the electrically driven motor and upstream of the heater core.
